# EUROPÄISCHE PATENTSCHRIFT

(11) **EP 1 043 578 B1**
(45) Veröffentlichungstag und Bekanntmachung des Hinweises auf die Patenterteilung: **13.10.2004**
(21) Anmeldenummer: 00105712.4
(22) Anmeldetag: 17.03.2000
(51) Int. Cl.: G01M 17/02

(54) **Optisches Prüfgerät für Reifen**
Optical testing apparatus for tires
Appareil optique pour tester des roues

(30) Priorität: 09.04.1999 DE 29906376 U; 03.09.1999 DE 19942155; 15.09.1999 DE 19944314
(43) Veröffentlichungstag der Anmeldung: 11.10.2000
(73) Patentinhaber: Steinbichler Optotechnik GmbH, 83115 Neubeuern (DE)
(72) Erfinder: Huber, Rainer, 83451 Piding (DE); Leitner, Bernd, 83115 Neubeuern (DE); Steinbichler, Hans Dr., 83115 Neubeuern (DE); Sun, Junli, 83064 Raubling-Nicklheim (DE); Rasenberger, Volker, 83064 Raubling-Grossholzhausen (DE); Köhler, Thomas, 83083 Riedering (DE); Leitner, Thomas, 83131 Nussdorf (DE); Engelsberger, Josef, 83075 Bad Feilnbach (DE)
(74) Vertreter: Zinnecker, Armin, Dipl.-Ing.

(56) Entgegenhaltungen:
- EP-A- 0 039 143
- DE-A- 2 913 601
- DE-A- 19 608 528
- DE-A- 19 731 486
- US-A- 5 293 687
- US-A- 5 600 435
- PATENT ABSTRACTS OF JAPAN vol. 011, no. 208 (P-593), 7. Juli 1987 (1987-07-07) & JP 62 030943 A (BRIDGESTONE CORP;OTHERS: 01), 9. Februar 1987 (1987-02-09)
- PATENT ABSTRACTS OF JAPAN vol. 016, no. 163 (P-1341), 21. April 1992 (1992-04-21) & JP 04 012214 A (TAMAGAWA SEIKI CO LTD;OTHERS: 01), 16. Januar 1992 (1992-01-16)

## Beschreibung

Die Neuerung betrifft ein Prüfgerät für Reifen mit einer Positioniervorrichtung für den zu prüfenden Reifen und mit einer Prüfvorrichtung, insbesondere einer Laser-Prüfvorrichtung.

Derartige Prüfgeräte sind in der Praxis bereits bekannt. Beispiele hierfür sind in DE 29 13 601 oder DE 197 31 486 gezeigt. Die Prüfgeräte können in einer Druckkammer bzw. Unterdruckkammer angeordnet sein. Bei der Positioniervorrichtung handelt es sich vorzugsweise um einen Auflagetisch mit einer Öffnung, beispielesweise einer kreisförmigen Öffnung, in deren Bereich sich die Prüfvorrichtung, beispielsweise eine Laser-Prüfvorrichtung, befindet. Die Laser-Prüfvorrichtung kann auch von oben in den Reifen gefahren werden. Die Laser-Prüfvorrichtung (Meßsonde, Laserprüfsonde) kann vorzugsweise verschwenkt werden, um einen gewissen Bereich, beispielsweise den gesamten Innenbereich des Reifens, zu überstreichen und dabei den Reifen zu überprüfen, beispielsweise auf Fehlstellen. Wenn sich das Prüfgerät innerhalb einer Vakuumkammer befindet, treten Fehlstellen aufgrund des Unterdrucks besser hervor und können von der Prüfvorrichtung bzw. Laser-Prüfvorrichtung auch besser und zuverlässiger erfaßt werden.

Aufgabe der Neuerung ist es, ein Prüfgerät dieser Art zu verbessern.

Gemäß der Neuerung wird diese Aufgabe dadurch gelöst, daß die Prüfvorrichtung mehrere Meßköpfe bzw. einen Meßkopf mit einer Mehrzahl von Beobachtungseinheiten aufweist. Hierdurch kann die Zeit, die für die Prüfung des Reifens benötigt wird, verkürzt werden.

Vorteilhafte Weiterbildungen sind in den Unteransprüchen beschrieben.

Die Prüfvorrichtung ist vorzugsweise drehbar gelagert. Statt dessen oder zusätzlich kann auch die Positioniervorrichtung des Reifens drehbar gelagert sein. Durch eine Drehung der Prüfvorrichtung mit den darauf befindlichen Meßköpfen und/oder der Positioniervorrichtung mit dem zu prüfenden Reifen wird eine Relativbewegung bzw. Relativdrehung zwischen Meßköpfen und Reifen erzielt.

Vorteilhaft sind dabei die Meßköpfe in einem gleichen Winkelabstand voneinander angeordnet. Beispielsweise können drei Meßköpfe vorgesehen sein, deren Winkelabstand voneinander jeweils 120° beträgt. Bei der Verwendung von zwei Meßköpfen beträgt deren Winkelabstand voneinander vorzugsweise 180°, bei vier Meßköpfen vorzugsweise jeweils 90°. Es ist allerdings auch möglich, noch mehr Meßköpfe anzuordnen. Hierdurch erhöht sich der apparative Aufwand, die Prüfzeit kann allerdings noch weiter verringert werden.

Eine weitere vorteilhafte Weiterbildung ist dadurch gekennzeichnet, daß die Meßköpfe an der Prüfvorrichtung verstellbar gelagert sind. Vorzugsweise ist jeder einzelne Meßkopf auf der Prüfvorrichtung verstellbar und jeweils arretierbar angeordnet. Die Verstellung kann automatisch oder manuell erfolgen. Die Meßköpfe können nach außen und innen verstellbar sein, vorzugsweise in radialer Richtung in bezug auf die Drehachse der Prüfvorrichtung. Statt dessen oder zusätzlich können die Meßköpfe nach oben und unten verstellbar sein, vorzugsweise parallel zur Drehachse der Prüfvorrichtung und/oder der Positioniervorrichtung, die vorzugsweise vertikal verlaufen. Statt dessen oder zusätzlich können die Meßköpfe in ihrer Orientierung verstellbar sein bzw. in der Orientierung der Kamera des jeweiligen Meßkopfes.

Nach einer weiteren vorteilhaften Weiterbildung ist ein Spiegel vorgesehen. Vorzugsweise sind mehrere Spiegel vorgesehen, vorzugsweise entsprechend der Anzahl der Meßköpfe. Durch die Verwendung von entsprechend angeordneten Spiegeln können auch ansonsten schwer zugängliche Stellen des Reifens überprüft werden.

Gemäß einem weiteren Aspekt der Erfindung zeichnet sich das Prüfgerät für Reifen dadurch aus, daß zumindest ein Meßkopf mit einer Mehrzahl von Beobachtungseinheiten und diesen zugeordneten Beleuchtungsquellen vorgesehen ist.

Die Beobachtungseinheiten sind in den Meßkopf integriert. Sie sind zusammen mit den Beleuchtungsquellen als Einheit bewegbar montiert. Durch die Mehrzahl von Beobachtungseinheiten in einem Meßkopf können mehrere Bereiche des zu prüfenden Reifens gleichzeitig beobachtet und geprüft werden. Hierdurch läßt sich die erforderliche Prüfzeit wesentlich verkürzen. Durch die Integration in jeweils einen Meßkopf wird die Bewegungssteuerung der Beobachtungseinheiten bzw. Beleuchtungsquellen vereinfacht.

In Weiterbildung der Erfindung sind jeder der Beobachtungseinheiten eine Mehrzahl von Beleuchtungsquellen zugeordnet. Vorzugsweise sind Laserlichtquellen in zwei Reihen angeordnet, wobei jede der Beobachtungseinheiten zwischen zwei Reihen der Laserlichtquellen angeordnet ist. Die Anordnung der Beleuchtungsquellen auf verschiedenen Seiten der Beobachtungseinheit bewirkt eine Ausleuchtung des zu prüfenden Reifenbereiches aus verschiedenen Richtungen und erlaubt eine verbesserte Beobachtung des Reifens.

Gemäß einer bevorzugten Ausführung der Erfindung besitzt der Meßkopf einen modulartigen Aufbau. Er besteht aus mehreren zusammensetzbaren Meßkopfsegmenten mit jeweils einer Beobachtungseinheit und mehreren, dieser zugeordneten Beleuchtungsquellen.

Jede der Beobachtungseinheiten kann eine Kamera aufweisen.

Gemäß einer alternativen Ausführungsform kann jede der Beobachtungseinheiten mehrere Kameras aufweisen, wobei den Kameras auch ein Strahlteiler vorgeschaltet sein kann, aber nicht sein muß, der bewirkt, daß jede Kamera einen eigenen Bereich beobachtet. Das von der Reifenoberfläche zurückgeworfene Objektlicht wird von dem Strahlteiler in mehrere Bereiche aufgeteilt und den einzelnen Kameras zugeführt. Die Kameras können auch einzelne Bereiche getrennt aufnehmen. Der Beobachtungsbereich der entsprechenden Beobachtungseinheit wird von dem Strahlteiler also in mehrere Beobachtungsbereiche aufgeteilt, so daß jede Kamera einen eigenen Bereich sieht. Durch die Anordnung mehrerer Kameras in einer Beobachtungseinheit wird die laterale Auflösung der Beobachtungseinheit verbessert.

In Weiterbildung der Erfindung können die Beobachtungseinheiten und/oder die Beleuchtungseinheiten um zumindest eine Achse schwenkbar und/oder entlang zumindest einer Achse verfahrbar ausgebildet sein.

Die Beobachtungseinheiten und/oder die Beleuchtungsquellen können relativ zu dem jeweiligen Meßkopf bewegbar sein.

Gemäß einer weiteren Ausführungsform der Erfindung können die Beobachtungseinheiten und/oder die Beleuchtungsquellen zusammen mit dem Meßkopf als Einheit bewegbar sein.

Vorzugsweise ist jeder Meßkopf in mehreren Achsen schwenkbar und verfahrbar ausgebildet. Hierdurch wird eine große Beweglichkeit des Meßkopfes und der darin integrierten Beobachtungseinheiten und Beleuchtungsquellen erreicht. Der zu prüfende Reifen kann abgefahren werden, wobei der Meßkopf jeweils in die für die Prüfung des Reifens günstigste Position gebracht werden kann.

Die notwendige Relativbewegung zwischen Meßkopf und Reifen kann auch durch eine entsprechende Bewegung der Positioniervorrichtung für den zu prüfenden Reifen erreicht werden. Aufgrund des Gewichts des Reifens und der Positioniervorrichtung kann es jedoch vorteilhaft sein, den Meßkopf zu bewegen. Die notwendigen Stellantriebe können leichter gebaut sein und die Verfahrbewegung kann leichter bewerkstelligt werden.

In Weiterbildung der Erfindung kann jeder der Beobachtungseinheiten und/oder den Beleuchtungsquellen zumindest ein Spiegel zugeordnet sein. Mit Hilfe derartiger Spiegel sind auch schwer zugängliche Stellen des Reifens beobachtbar bzw. überprüfbar. Vorzugsweise sind die Spiegel jeweils schwenkbar und/oder verfahrbar ausgebildet, insbesondere jeweils mehrachsig, um die Reifenoberfläche entsprechend abfahren zu können.

Gemäß einem weiteren Aspekt der vorliegenden Erfindung zeichnet sich das Prüfgerät für Reifen dadurch aus, daß eine Einrichtung zur Erfassung der Größe und/oder Position des Reifens und eine Steuervorrichtung vorgesehen sind, die den zumindest einen Meßkopf entsprechend der erfaßten Größe und/oder Position des Reifens positioniert. Unabhängig von der Anzahl der Meßköpfe und/oder der Beobachtungseinheiten und Beleuchtungsquellen besitzt eine solche Anordnung den Vorteil, daß der Prüfvorgang weitgehend automatisiert bewerkstelligt werden kann und sich das Prüfgerät selbständig auf den jeweiligen Reifentyp adaptiert. Die Steuereinrichtung bestimmt automatisch die notwendige Meßkopfposition und positioniert den bzw. die Meßköpfe derart, daß die Prüfung des Reifens erfolgen kann. Unabhängig vom Reifentyp wird der Meßkopf stets automatisch in die richtige Prüfposition relativ zum Reifen gebracht. Die Positionierung kann gegebenenfalls durch eine entsprechende Bewegung des Reifens mit Hilfe dessen Positioniervorrichtung erfolgen. Vorzugsweise jedoch werden die Meßköpfe in ihre Prüfposition verfahren und verschwenkt.

Die Erfassung der Reifengröße und/oder Position kann gemäß einer Ausführung der Erfindung über eine Anordnung erfolgen, welche die Reifengröße, insbesondere dessen Durchmesser und Breite über Schattenprojektion ermittelt. Hierzu ist zumindest eine Beleuchtungsquelle zur Beleuchtung des Reifens und eine Beobachtungseinheit vorgesehen, die den vom Reifen projizierten Schatten erfaßt. Vorzugsweise wird hierbei der Reifen quer zur Beleuchtungsrichtung bewegt. Aus der Bewegung des Reifens und dem sich dabei ändernden Schattenwurf lassen sich Innen- und Außendurchmesser des Reifens sowie seine Breite bestimmen. Die Bestimmung der Reifengröße kann auch mit anderen Mitteln, z.B. Lichtschranken, erfolgen. Da der Reifen in das Gerät transportiert wird, kann die Bewegung des Reifens in Verbindung mit Lichtschranken zur Durchmesserbestimmung benutzt werden.

Um Gewebeschäden im Reifen erfassen zu können, kann in Weiterbildung der findung das Prüfgerät eine Röntgeneinrichtung zum Röntgen des Reifens aufweisen.

Ferner kann ein Spannungsprüfgerät mit zumindest einer Elektrode und einem mit dieser zusammenwirkenden Gegenstück vorgesehen sein, wobei die Elektrode und das Gegenstück auf unterschiedlichen Reifenseiten positionierbar sind. Das Gegenstück kann vorzugsweise als Metallwalze ausgebildet sein, die der Abfahrbewegung der Elektrode auf der gegenüberliegenden Reifenseite durch eine Abwälzbewegung folgt. Wird an die Elektrode, die als Drahtbügel, -kette und dergleichen ausgebildet sein kann, Spannung, insbesondere Hochspannung, angelegt, können Nagellöcher im Reifen sowie andere Beschädigungen dieser Art leicht erfaßt werden.

Eine vorteilhafte Ausführung der Erfindung besteht ferner darin, daß eine Überdruckprüfung zur Erfassung von Karkassenschwächungen erfolgt. Mittels einer Überdruckvorrichtung wird der Reifen mit Überdruck beaufschlagt. Bei der sich ergebenden Aufblähung des Reifens sind die Stellen, an denen die Karkasse geschwächt ist, leicht erkennbar, da hier eine stärkere beulenartige Aufweitung erfolgt.

Darüber hinaus kann mittels einer Kamera mit Bildverarbeitungssystem eine Oberflächenkontrolle der Innenseite für Risse erfolgen.

Vorzugsweise besitzt das Reifenprüfgerät eine Einrichtung zur gemeinsamen gebnisdarstellung der verschiedenen Einzelprüfungen. Die Karkassenbewertung aufgrund mehrerer der genannten Methoden erlaubt eine sichere Prüfung des Reifens.

Bevorzugte Ausführungsbeispiele der Erfindung werden nachstehend anhand der beigefügten Zeichnung im einzelnen erläutert. In der Zeichnung zeigt
- Fig. 1: ein Prüfgerät für Reifen mit einer Vakuumkammer in geöffneter Position in einer Seitenansicht,
- Fig. 2: das Prüfgerät mit Vakuumkammer gemäß Fig. 1 in geschlossener Stellung, ebenfalls in einer Seitenansicht,
- Fig. 3: einen Teil des Prüfgeräts in einer Ansicht von oben
- Fig. 4: eine Draufsicht auf einen Meßkopf mit mehreren Beobachtungseinheiten und diesen zugeordneten Beleuchtungsquellen gemäß einer bevorzugten Ausführung der Erfindung,
- Fig. 5: eine Seitenansicht des Meßkopfes aus Fig. 4,
- Fig. 6: einen Meßkopf mit daran schwenkbar befestigten Beobachtungseinheiten und Beleuchtungsquellen gemäß einer bevorzugten Ausführung der Erfindung in einer schematischen Darstellung,
- Fig. 7: einen einzelnen Meßkopf in schematischer Darstellung, die die Bewegbarkeit des Meßkopfes zeigt,
- Fig. 8: ein Prüfgerät mit mehreren Meßköpfen gemäß einer bevorzugten Ausführung der Erfindung in schematischer Darstellung, die die mehrachsige Bewegbarkeit der einzelnen Meßköpfe zeigt,
- Fig. 9: einen einzelnen Meßkopf mit einer Beobachtungseinheit und zugeordneten Beleuchtungsquellen, der die Innenoberfläche des Reifens mittels eines Spiegels beleuchtet und beobachtet,
- Fig. 10: eine Beobachtungseinheit mit zwei Kameras und einem diesen vorgeschalteten Strahlteiler gemäß einer bevorzugten Ausführung der Erfindung, bei der der Sichtbereich der Beobachtungseinheit auf die beiden Kameras aufgeteilt ist,
- Fig. 11: die Anordnung einer Beleuchtungsquelle und einer Beobachtungseinheit zur Erfassung des Außendurchmessers des Reifens mittels Schattenprojektion in einer schematischen Darstellung,
- Fig. 12: die Anordnung einer Beleuchtungsquelle und einer Beobachtungseinheit zur Bestimmung des Innendurchmessers des Reifens in einer Darstellung ähnlich Fig. 11,
- Fig. 13: die Anordnung mehrerer Beleuchtungsquellen und zweier Beieuchtungsschirme zur Bestimmung des Innen- und Außendurchmessers des Reifens sowie dessen Breite mittels Schattenprojektion gemäß einer bevorzugten Ausführung der Erfindung,
- Fig. 14: eine Röntgeneinheit zum Röntgen des Reifens, um Gewebeschäden im Reifen zu erkennen, und
- Fig. 15: eine Spannungs-Prüfeinheit zur Hochspannungs-Strommessung zur Überprüfung des Reifens gemäß einer bevorzugten Ausführungsform der Erfindung.

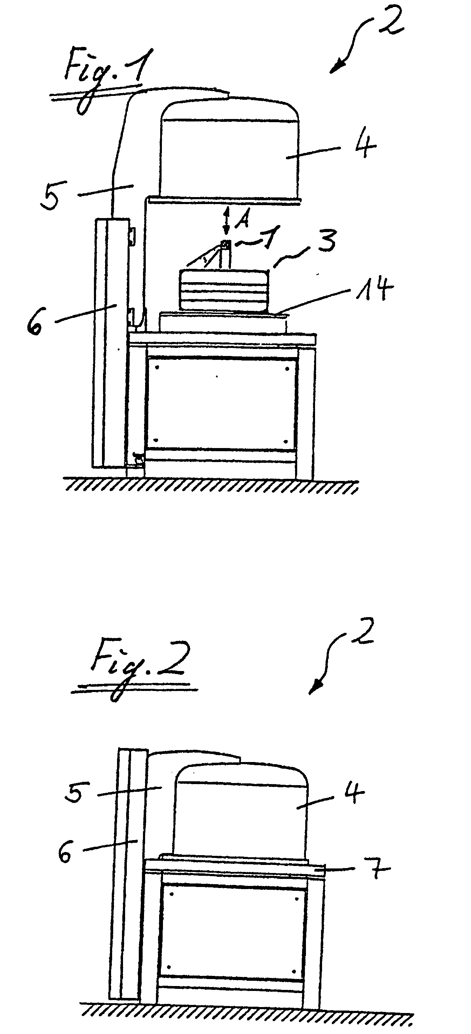

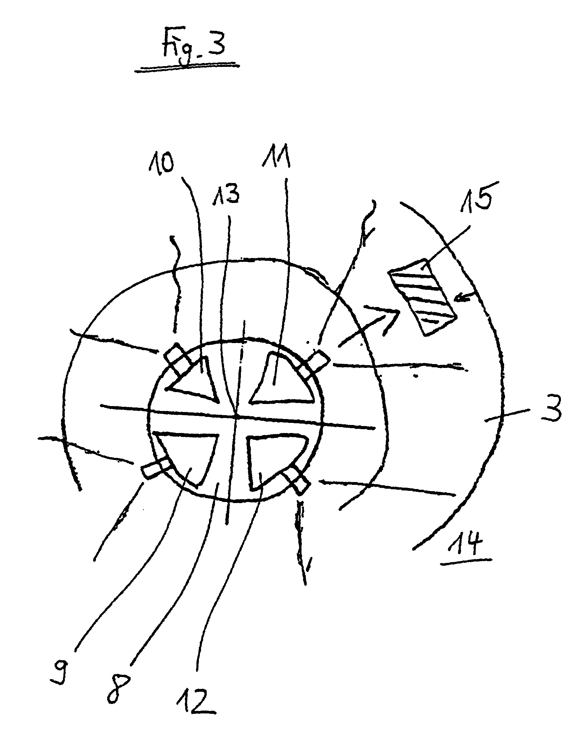

In Fig. 1 ist ein Prüfgerät für Reifen gezeigt, das einen Meßkopf 1 aufweist, der sich im Innenbereich eines Reifens 3 befindet. Das Prüfgerät ist von einer Vakuumkammer 2 umgeben, die eine Haube 4 aufweist, die an einem vertikal beweglichen Schlitten 5 angeordnet ist. Der Schlitten 5 ist in einer Führung 6 vertikal beweglich. Er kann nach unten in die in Fig. 2 gezeigte geschlossene Stellung verfahren werden, in der die Haube 4 dichtend auf dem Tisch 7 aufliegt. In dieser Stellung wird innerhalb der Haube 4 durch eine Vakuumpumpe (in der Zeichnung nicht dargestellt) ein Vakuum angelegt, so daß Fehlstellen des Reifens 3 besser erfaßt werden können.

Wie aus Fig. 3 ersichtlich weist das Prüfgerät eine Prüfvorrichtung 8 auf, die aus einem Tisch und vier Laser-Meßköpfen 9, 10, 11, 12 besteht, die auf dem Tisch 8 in einem Winkelabstand von jeweils 90° voneinander angeordnet sind. Die Prüfvorrichtung 8 ist um ihre vertikale Mittenachse 13 drehbar gelagert.

Der Reifen 3 liegt auf einem seine Positioniervorrichtung bildenden Tisch 14 auf, der in seiner Mitte eine mit der vertikalen Achse 13 konzentrische, kreisförmige Öffnung aufweist, innerhalb der sich die Prüfvorrichtung 8 befindet. Der Tisch 14 kann drehbar gelagert sein. Die Prüfvorrichtung kann auch von oben in den Reifen bewegt werden.

Die Prüfvorrichtung 8 ist in vertikaler Richtung, also längs der Achse 13, verstellbar. Sie wird zunächst nach unten unterhalb des Niveaus des Tisches 14 verfahren. Nachdem der Reifen 3 auf den Tisch 14 aufgelegt worden ist, fährt die Prüfvorrichtung 8 in vertikaler Richtung nach oben in die Arbeitsstellung, in der sie sich innerhalb der Öffnung des Tisches 14 und innerhalb des Reifens 3 befindet. Durch eine Drehung von 90° um die Achse 13 können sämtliche Laser-Meßköpfe 9 - 12 den gesamten Innenbereich des Reifens 3 überstreichen und prüfen.

Oberhalb des Reifens 3 sind Spiegel 15 angeordnet (in der Fig. 3 ist aus Gründen der vereinfachten zeichnerischen Darstellung nur ein Spiegel 15 gezeigt). Jedem Laser-Meßkopf 9 - 12 ist ein Spiegel 15 zugeordnet; der in der Fig. 3 zeichnerisch dargestellte Spiegel 15 ist dem Laser-Meßkopf 11 zugeordnet. Durch den Spiegel ist es möglich, die obere Mantelfläche des Reifens 3 zu prüfen. Zur Prüfung der unteren Mantelfläche des Reifens wird der Reifen gewendet.

Die Meßköpfe 9 - 12 sind an der Prüfvorrichtung 8 verstellbar angeordnet. Sie können in radialer Richtung in bezug auf die vertikale Achse 13 nach außen und innen verstellt werden. Ferner können sie nach oben und unten verstellt werden. Schließlich kann die Orientierung der Kameras der Laser-Meßköpfe 9 - 13 verändert werden. Durch eine Veränderung der Kameraorientierung kann beispielsweise erreicht werden, daß die Kamera von oben nach unten "blickt" oder von innerhalb des Reifens nach oben.

Durch die Neuerung wird ein weiterentwickeltes Reifenprüfgerät geschaffen, das die Besonderheit aufweist, daß mehrere Meßköpfe an unterschiedlichen Positionen verwendet werden können. Hierdurch wird Prüfzeit eingespart, da mehrere Sektoren gleichzeitig oder praktisch gleichzeitig aufgenommen und geprüft werden können. Zudem vereinfacht sich der Drehvorgang des Meßkopfes und/oder des Reifens, da nicht mehr eine Relativ-Drehmöglichkeit über 360° vorgesehen werden muß, sondern eine entsprechend geringere Relativ-Drehmöglichkeit, je nach Anzahl der verwendeten Meßköpfe. Die Anordnung der Meßköpfe kann so gewählt werden, daß sie unterschiedliche Sektoren des Reifens gleichzeitig erfassen oder den Reifen gleichzeitig in unterschiedlichen Ansichten messen oder beides. Beispielsweise können mit zwei Meßköpfen gleichzeitig zwei Sektoren der Lauffläche eines Reifens geprüft werden. Es ist allerdings auch möglich, gleichzeitig eine Ansicht der Lauffläche und gleichzeitig eine Ansicht im Wulst- oder Seitenwandbereich des Reifens zu prüfen.

Zusätzlich können die mehreren Meßköpfe auch um die Reifenachse 13 gedreht werden. Bei der Verwendung von beispielsweise vier Meßköpfen und einer Möglichkeit, diese vier gleichmäßig am Umfang verteilten Meßköpfe um 45° zu drehen können acht Sektoren der Reifenlauffläche innerhalb der ansonsten erforderlichen Zeit für zwei Einzelaufnahmen erfaßt werden.

Die Anzahl der Meßköpfe kann variiert werden. Beispielsweise könnten drei Meßköpfe in drei Positionen verwendet werden oder zwei Meßköpfe in zwei Positionen. Nach einer anderen vorteilhaften Anordnung können zwei Meßköpfe für die Seitenwand des Reifens und zwei Meßköpfe für die Lauffläche des Reifens verwendet werden.

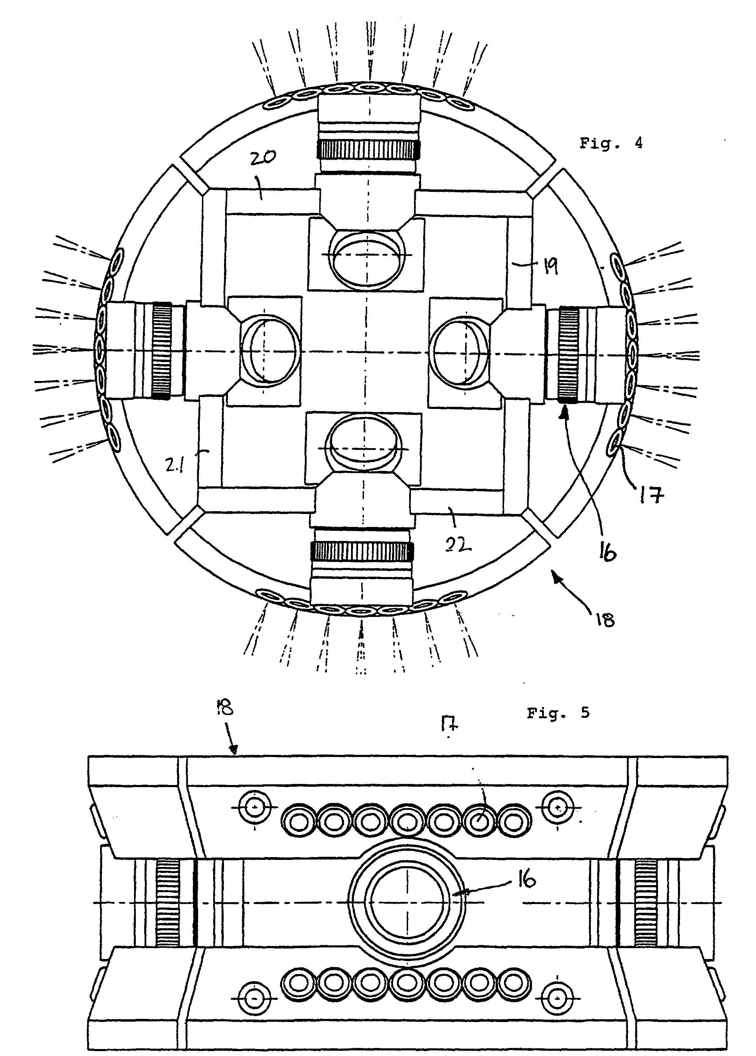

Die Figuren 4 und 5 zeigen einen Meßkopf gemäß einer bevorzugten Ausführung der Erfindung, in den eine Mehrzahl von Beobachtungseinheiten 16 sowie eine Mehrzahl von Beleuchtungsquellen 17 integriert sind. Als Beleuchtungsquellen 17 sind vorzugsweise Laserlichtquellen vorgesehen. Die Beobachtungseinheiten 16 besitzen eine oder mehrere Kameras, wie noch erläutert werden wird.

Wie Fig. 4 zeigt, ist der Meßkopf 18 aus vier identischen Meßkopfsegmenten 19, 20, 21, 22 aufgebaut, die jeweils eine Beobachtungseinheit 16 und 14 Beleuchtungsquellen 17 besitzen. Die Beobachtungseinheiten 16 sind paarweise diametral gegenüberliegend angeordnet, die Teilung zwischen den Beobachtungseinheiten 16 ist gleichmäßig und beträgt im gezeigten Fall 45°.

Bei jedem Meßkopfsegment sind die Beleuchtungsquellen 17 in zwei zueinander parallelen Reihen angeordnet, wobei die jeweils zugehörige Beobachtungseinheit 16 zwischen den Beleuchtungsquellen 17 liegt bzw. zwischen den Beteuchtungsquellen hindurch schaut (vgl. Fig. 5).

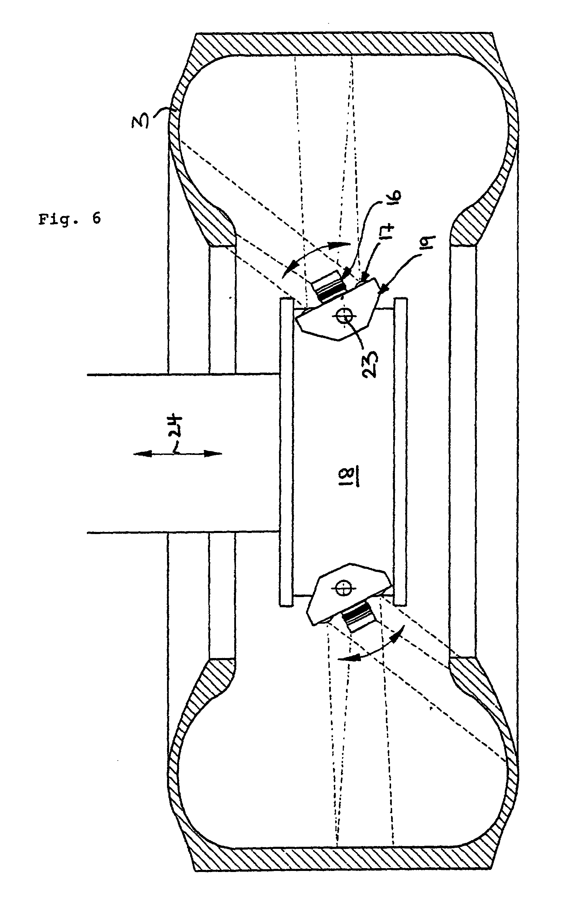

Die Meßkopfsegmente 19, 20, 21, 22 bzw. die jeweiligen Beleuchtungseinheiten 16 und Beleuchtungsquellen 17 können an dem Meßkopf 18 starr montiert und mit diesem zusammen als Einheit bewegbar gelagert bzw. geführt sein. Gemäß einer weiteren Ausführung der Erfindung (vgl. Fig. 6) kann jedoch auch vorgesehen sein, daß die einzelnen Meßkopfsegmente, d.h. die einzelnen Beobachtungseinheiten 16 mit den diesen zugeordneten Beleuchtungsquellen 17 an dem Meßkopf 18 beweglich gelagert sind. Insbesondere können die Beobachtungseinheiten 16 mit den zugehörigen Beleuchtungsquellen 17 um eine Achse schwenkbar an dem Meßkopf 18 gelagert sein. Hierdurch kann zum einen der Meßkopf 18 als Ganzes mit den darin integrierten Beobachtungseinheiten 16 und Beleuchtungsquellen 17 verfahren bzw. gedreht und geschwenkt werden. Zum anderen können die Beobachtungseinheiten 16 noch relativ zum Meßkopf 18 geschwenkt und auf die abzufahrende Reifenoberfläche ausgerichtet werden, wodurch eine optimale Beobachtung der zu prüfenden Reifenoberfläche ermöglicht wird. Wie Fig. 6 zeigt, liegen die Schwenkachsen 23 der Meßkopfsegmente 19, 20, 21 und 22 in der Rotationsebene des Reifens 3, und zwar in tangentialer Richtung zu einem gedachten Kreis um die Rotationsachse des Reifens. Der Meßkopf 18 selbst ist entlang einer zur Rotationsebene des Reifens 3 senkrechten Achse 24 verfahrbar, d.h. bei liegendem Reifen höhenverstellbar. Zusätzlich kann der Meßkopf 18 als Ganzes um die Achse 24 gedreht werden, so daß die Beobachtungseinheiten 16 die Innenoberfläche des Reifens 3 absuchen können.

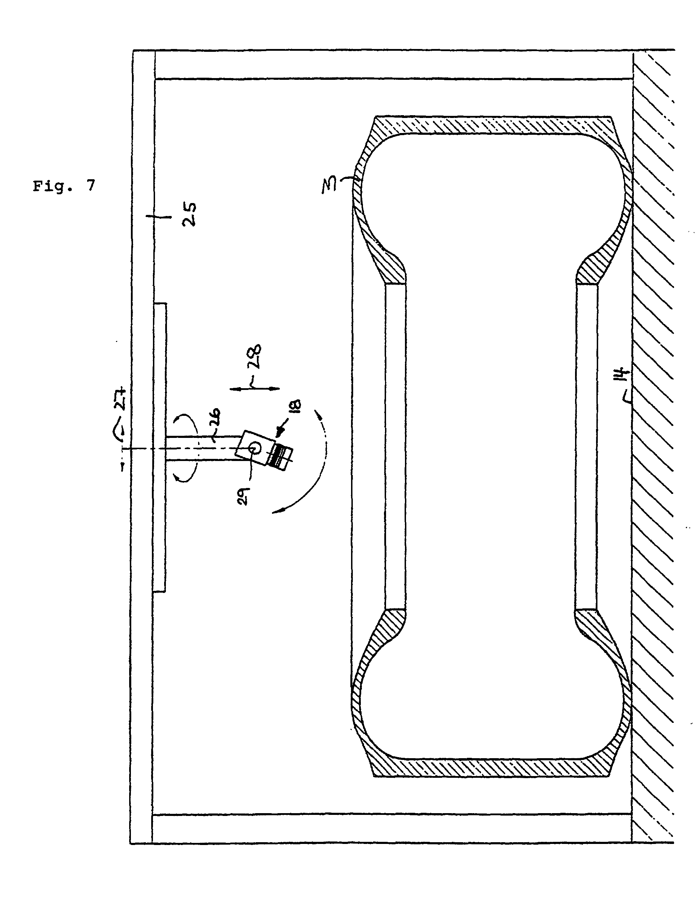

Die Antriebe zum Verfahren des Meßkopfes 18 können sich innerhalb oder außerhalb des Reifens 3 befinden. Fig. 7 zeigt eine Ausführung der Erfindung, bei der der Meßkopf 18 an einem Portal 25 gelagert ist. Ein sich von dem Portal 25 nach unten erstreckender Halter 26 für den Meßkopf 18 kann an dem Portal 25 zweiachsig verfahren werden, und zwar entlang der in Fig. 7 mit 27 bezeichneten Achse und entlang einer hierzu senkrechten Achse. Ferner kann der Halter 26 um seine Längsachse bzw. um eine zur Auflagefläche der Positioniervorrichtung 14 für den Reifen 3 senkrechte Achse gedreht werden. Der Meßkopf 18 kann entlang dem Halter 26 entlang der Achse 28 auf- und abgefahren werden. Die Höhenverstellbarkeit des Meßkopfes 18 entlang der Achse 28 kann auch durch Verstellung des Halters 26 selbst, insbesondere durch Längeneinstellung des Halters 26 erfolgen. Wie Fig. 7 zeigt, ist der Meßkopf 18 ferner schwenkbar um eine Achse 29 an dem Halter 26 befestigt. Die Schwenkachse 28 des Meßkopfes 18 steht vorzugsweise senkrecht zur Drehachse des Halters 26.

Der Meßkopf 18 oder gegebenenfalls eine Mehrzahl von Meßköpfen ist also oberhalb des Reifens angeordnet und von oben her angelenkt und gelagert. Wie Fig. 7 zeigt, ermöglicht die hängende Lagerung des Meßkopfes eine vereinfachte Ausbildung der Unterlage, auf der der Reifen abgestützt wird. Insbesondere kann die Unterlage 14 durchgehend, beispielsweise als einfache Platte ausgebildet sein. In der Unterlage brauchen keine Ausnehmungen, Öffnungen oder dergleichen vorgesehen sein, in denen der Meßkopf aufgenommen sein und durch die der Meßkopf verfahren werden kann (vgl. Fig. 7).

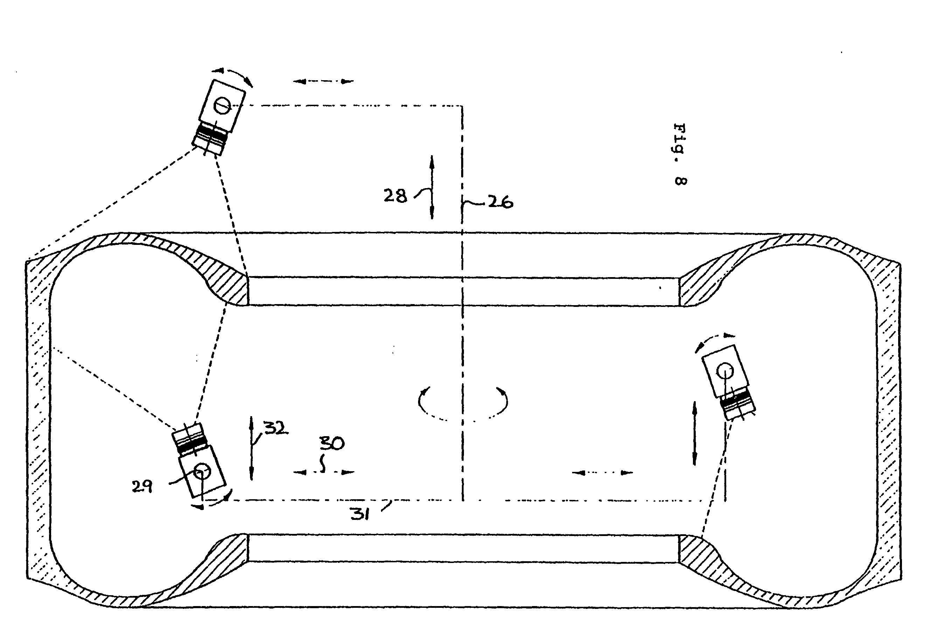

Um die Reifenprüfung in verkürzter Zeit bewerkstelligen zu können, können mehrere Meßköpfe 18 vorgesehen sein, die ebenfalls jeweils mehrachsig bewegbar gelagert sind. Wie Fig. 8 zeigt, können drei Meßköpfe 18 vorgesehen sein, von denen zwei die Innenseite der Reifenkarkasse und einer deren Außenseite prüft. Vorzugsweise sind die Meßköpfe ähnlich der zuvor beschriebenen Ausführung an einem Halter 26 befestigt, der an einem Portal gelagert sein kann. Der Halter 26 ist in der zuvor beschriebenen Weise entlang der Achse 28 höhenverstellbar und um seine Längsachse drehbar. Die Meßköpfe 18 sind jeweils an dem Halter 26 mehrachsig verstellbar befestigt. Zum einen können sie entlang radialer Achsen 30 verfahren werden, d.h. sie sind in ihrem Abstand von dem Halter 26 einstellbar. Hierdurch kann das Prüfgerät auf unterschiedliche Reifendurchmesser eingestellt bzw. angepaßt werden. Ferner sind alle Meßköpfe 18 um je eine Schwenkachse 29 schwenkbar an dem Ausleger 31 gelagert, durch den sie mit dem Halter 26 verbunden sind. Die Schwenkachsen der Meßköpfe 18 erstrecken sich vorzugsweise tangential zu gedachten Kreisen um die Rotationsachse des Reifens 3. Ferner sind die Meßköpfe 18 zur Inspektion der Innenseite des Reifens 3 höhenverstellbar relativ zu dem Halter 26, und zwar entlang der in Fig. 8 mit 32 bezeichneten Achsen, die sich parallel zur Verstellachse 28 des Halters 26 erstrecken. Die Meßköpfe 18 können also zusammen mittels des Halters 26 höhenverstellt werden, darüber hinaus kann eine Höhenverstellung der Meßköpfe 18 relativ zu dem Halter 26 entlang der Achsen 32 erfolgen.

Die umfassende Verstellbarkeit der Meßköpfe 18 getrennt voneinander oder simultan miteinander erlaubt zum einen eine optimale Anstellung der einzelnen Meßköpfe an den jeweils zu prüfenden Reifenabschnitt. Zum anderen kann nach der individuellen Justierung der Reifen mit einer einfachen kinematischen Steuerung, nämlich einer Drehung des Halters 26 um seine Längsachse, abgefahren werden.

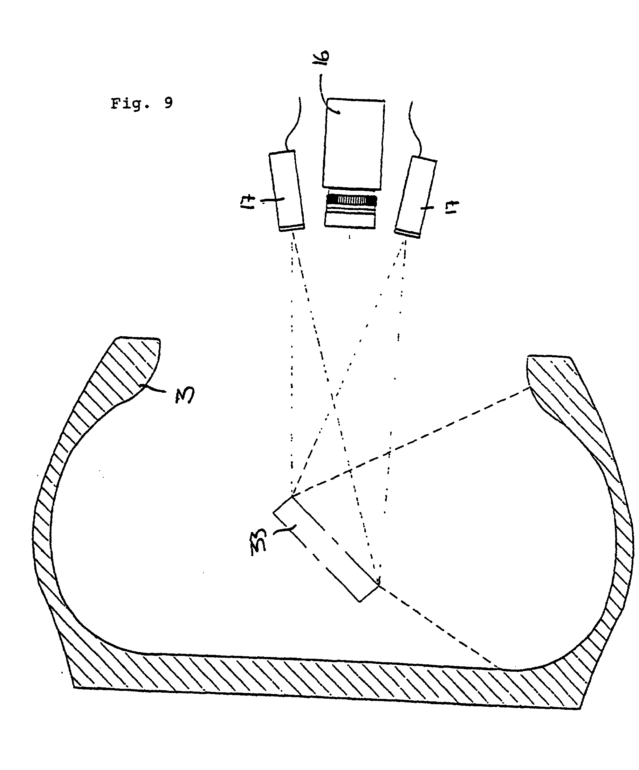

Die Beleuchtung und/oder die Beobachtung der Reifenoberfläche kann auch über Spiegel erfolgen. Hierzu ist jeder Beobachtungseinheit 16 sowie den zugehörigen Beleuchtungsquellen 17 ein Spiegel 33 zugeordnet, der das von den Beleuchtungsquellen 17 ausgehende Licht auf den zu beobachtenden Reifenbereich wirft. Die Beobachtungseinheiten 16 beobachten den beleuchteten Bereich ebenfalls über den Spiegel 33. Wie Fig. 9 zeigt, kann dieser Spiegel 33 im Reifeninneren angeordnet sein, um die Innenseite des Reifens zu prüfen. In vorteilhafter Weise ist der Spiegel mehrachsig verfahrbar und schwenkbar, um exakt derart justiert zu werden, daß der jeweils gewünschte Bereich des Reifens beleuchtet und beobachtet werden kann. Mit Hilfe eines derartigen Spiegels 33 können auch schwer zugängliche Stellen, in die der relativ sperrige Meßkopf 18 nur schwer positionierbar wäre, beobachtet und geprüft werden.

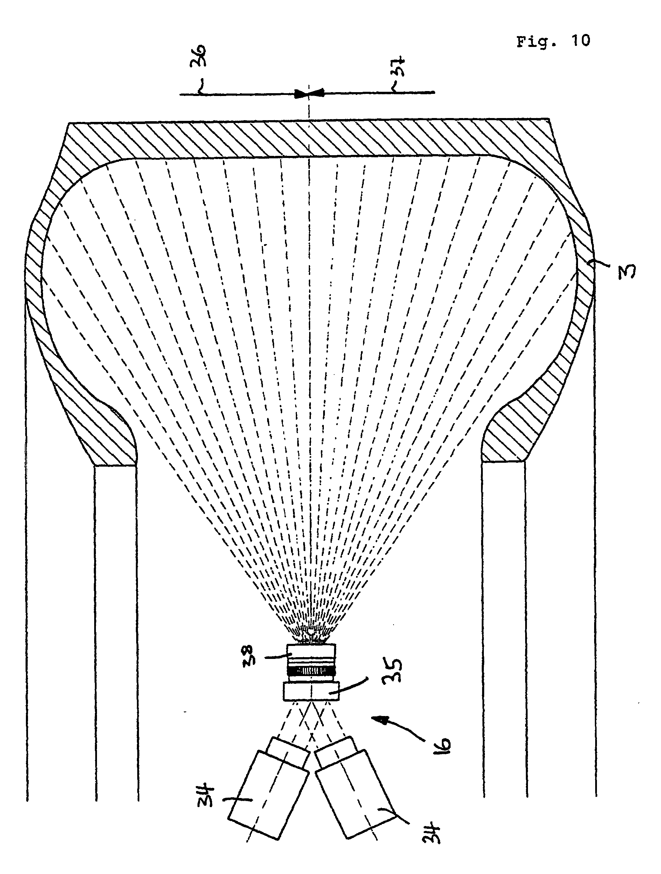

Um die laterale Auflösung der Beobachtungseinheiten 16 zu verbessern, können diese jeweils zwei Kameras 34 aufweisen, denen ein Strahlteiler 35 vorgeschaltet ist, wie Fig. 10 zeigt. Der Strahlteiler 35 teilt den von der Beobachtungseinheit 16 zu beobachtenden Bereich in zwei Bereiche auf, die von jeweils einer Kamera 34 beobachtet werden. In Fig. 10 ist die obere Hälfte 36 des Beobachtungsbereiches für die obere Kamera 34 und die untere Hälfte 37 des beobachteten Bereiches der Reifeninnenseite für die in Fig. 10 untere Kamera 34 sichtbar. Obwohl dies in Fig. 10 nicht gezeigt ist, sind die beiden Kameras 34 sowie der Strahlteiler 35 und die diesem vorgeschaltete Optik 38 zweckmäßigerweise zu einer Einheit zusammengefaßt, die in den entsprechenden Meßkopf 18 integriert ist.

Um den Prüfvorgang weitestgehend zu automatisieren, stellt sich die Prüfvorrichtung von selbst auf unterschiedliche Reifentypen ein. Hierzu wird die Reifengröße und die Position des Reifens auf der Positioniervorrichtung erfaßt und die notwendigen Meßkopfpositionen selbständig bestimmt. Vorzugsweise erfolgt die Bestimmung des Außen- und Innendurchmessers sowie der Breite des Reifens mittels Schattenprojektion.

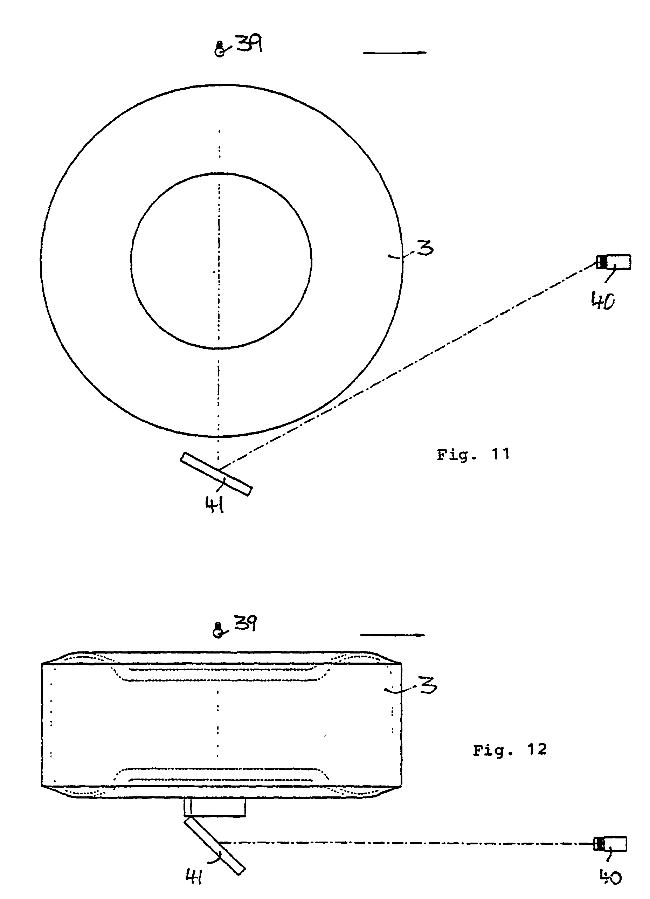

Gemäß einer bevorzugten Ausführung der Erfindung ist hierzu eine Beleuchtungsquelle 39 auf einer Seite des Reifens 3 und eine Beobachtungseinheit 40 auf einer anderen Seite des Reifens angeordnet. Die Beobachtungseinheit 40 ist dabei derart angeordnet, daß sie das auf der der Beleuchtungsquelle 39 gegenüberliegenden Seite des Reifens 3 ankommende Licht erfaßt, wenn der Reifen dem von der Beleuchtungsquelle 39 ausgehenden Licht nicht im Wege liegt. Wie Fig. 11 zeigt, kann dies auch mittels eines Spiegels 41 erfolgen, der der Beleuchtungsquelle 39 diametral gegenüberliegend angeordnet ist und das von der Beleuchtungsquelle 39 kommende Licht zur Beobachtungseinheit 40 umlenkt.

Der Reifen 3 wird quer zur Richtung des sich von der Beleuchtungsquelle 39 ausbreitenden Lichts bewegt und durch den entsprechenden Lichtstrahl geführt. Aus der Dauer des Schattenwurfs des Reifens 3 und der Bewegungsgeschwindigkeit bzw. aus dem Weg des Reifens läßt sich der Außendurchmesser des Reifens 3 bestimmen. Anstelle der Bewegung des Reifens 3 kann auch die Beleuchtungsquelle 39 mit dem Spiegel 41 bzw. der Beobachtungseinheit 40 bewegt werden.

Fig. 12 zeigt die Anordnung einer weiteren Beleuchtungsquelle, eines weiteren Spiegels und einer weiteren Beobachtungseinheit zur Bestimmung des Innendurchmessers des Reifens 3. Die Anordnung ist derart getroffen, daß der Lichtstrahl durch die Innenausnehmung des Reifens 3 treten kann. Der Reifen 3 kann wiederum quer zur Lichtstrahlrichtung bewegt werden. Ansonsten entspricht die Anordnung gemäß Fig. 12 dem in Fig. 11 gezeigten Prinzip.

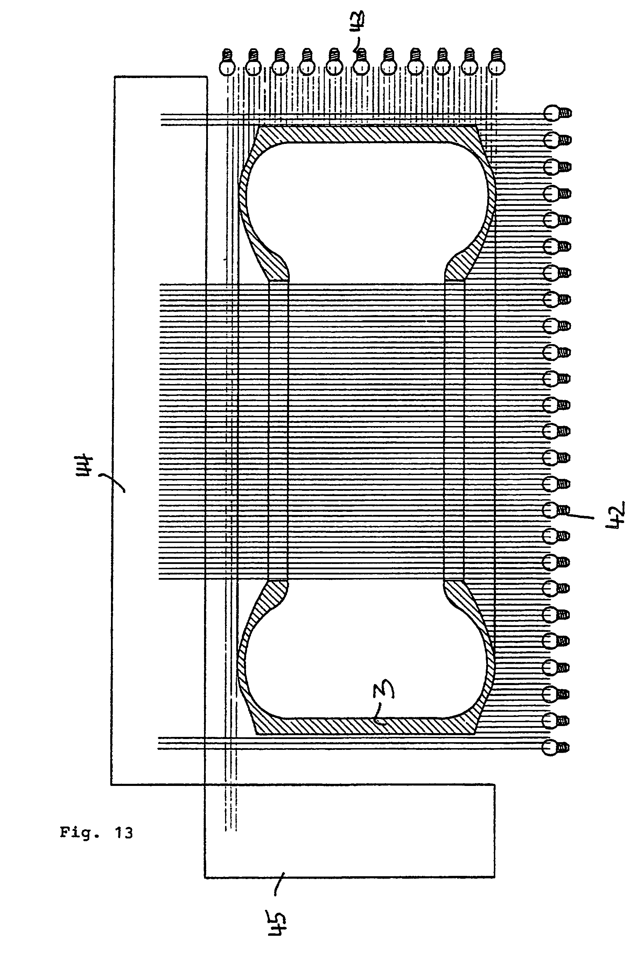

Die Größe und/oder Position des Reifens 3 kann auch mit Hilfe einer Vielzahl von Beleuchtungsquellen 42 bestimmt werden. Wie Fig. 13 zeigt, sind bei dieser Anordnung eine erste Reihe von Beleuchtungsquellen 42 auf einer ersten Seite des Reifens 3 angeordnet, wobei die Reihe länger ist als der maximale Durchmesser des Reifens 3. Eine zweite Reihe von Beleuchtungsquellen 43 ist auf einer Seite des Reifens gegenüberliegend dessen Umfangsfläche angeordnet, wobei die Reihe länger ist als die maximale Breite des Reifens 3. Den Beleuchtungsquellen 42 und 43 sind auf der jeweils gegenüberliegenden Seite des Reifens 3 Schirme 44 bzw. 45 zugeordnet, die das jeweils außen am Reifen vorbeitretende bzw. durch die Innenausnehmung des Reifens 3 hindurchtretende Licht erfassen. Aus dem jeweiligen Schattenwurf des Reifens 3 kann dessen Breite, Innendurchmesser und Außendurchmesser bestimmt werden.

Eine in den Figuren nicht dargestellte Steuereinrichtung wertet die die Größe und Position des Reifens repräsentierenden Daten aus und steuert die Antriebe der Meßköpfe derart an, daß die Meßköpfe automatisch in ihre jeweilige Prüfposition gefahren werden. Hierbei kann gegebenenfalls auch der Reifen 3 entsprechend bewegt werden.

Um eine vollständige Prüfung des Reifens zu erreichen, besitzt das Prüfgerät neben der optischen Beobachtungs- bzw. Prüfvorrichtung noch weitere Prüfeinheiten.

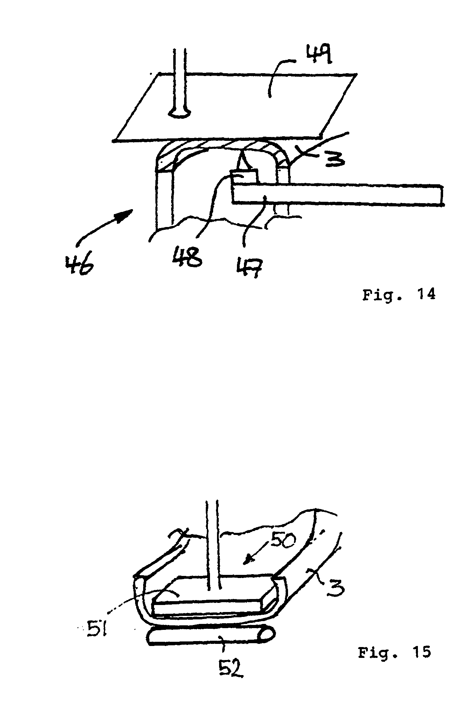

In Weiterbildung der Erfindung kann insbesondere eine Röntgeneinrichtung 46 vorgesehen sein. Diese kann einen Röntgenkopf 47 mit einer daran angeordneten Röntgenquelle 48 sowie einen damit zusammenwirkenden Detektor 49 aufweisen. Zweckmäßigerweise ist der Röntgenkopf 47 und der damit zusammenwirkende Detektor 49 auf gegenüberliegenden Seiten des Reifenmantels positionierbar, so daß die Reifenwandung von den Röntgenstrahlen durchleuchtet werden kann. Der Röntgenkopf 47 und der Detektor 49 sind dabei derart verfahrbar, daß die Reifenwandung zur Gänze abgefahren werden kann. Gegebenenfalls kann auch der Reifen entsprechend bewegt werden. Zweckmäßigerweise wird der Röntgenkopf 47 bewegt, um diesen zu positionieren. Das Abfahren des Reifens erfolgt dann durch eine Drehung des Reifens um seine Rotationsachse. Mit Hilfe einer solchen Röntgeneinrichtung können Gewebeschäden im Reifen erfaßt werden (vgl. Fig. 14).

In Weiterbildung der Erfindung kann ferner ein Spannungsprüfgerät 50 zur Hochspannungs-Strommessung von zum Beispiel Nagellöchem im Reifen 3 vorgesehen sein. Das Spannungsprüfgerät 50 weist, wie Fig. 15 zeigt, eine Hochspannungselektrode 51, die als Drahtbügel, -ketten und dergleichen ausgebildet sein kann, sowie eine Metallwalze 52 auf, die mit der Hochspannungselektrode 51 zusammenwirkt. Die Hochspannungselektrode 51 und die Metallwalze 52 sind auf gegenüberliegenden Seiten des Reifens 3 positionierbar, derart, daß die Reifenwandung zwischen der Hochspannungselektrode 51 und der Metallwalze 52 zu liegen kommt. Durch eine entsprechende Relativbewegung zwischen dem Reifen 3 und der Hochspannungselektrode 51 sowie der Metallwalze 52 wird der Reifen abgefahren, wobei die Elektrode 51 und die Metallwalze 52 stets gegenüberliegend verbleiben. Bei Nagellöchem und dergleichen kommt es zu Spannungsdurchschlag, der die entsprechende Beschädigung im Reifen anzeigt.

Ferner kann der Reifen 3, ohne daß dies in den Zeichnungen gezeigt wäre, einer Überdruckprüfung für Karkassenschwächungen oder einer Oberflächenkontrolle der Innenseite für Risse mittels einer Kamera mit Bildverarbeitungssystem unterworfen werden. Ebenfalls nicht dargestellt in den Zeichnungen ist eine Einrichtung, mit Hilfe derer eine gemeinsame Ergebnisdarstellung der verschiedenen Einzelprüfungen bewerkstelligt und die entsprechende Karkassenbewertung durchgeführt werden kann.

## Patentansprüche

1. Prüfgerät für Reifen mit einer Positioniervorrichtung (14) für den zu prüfenden Reifen (3) und mit einer Prüfvorrichtung (8), insbesondere einer Laser-Prüfvorrichtung, die mehrere Meßköpfe (9, 10, 11, 12), insbesondere Laser-Meßköpfe umfaßt,
**dadurch gekennzeichnet,**
**daß** das Prüfgerät von einer Vakuumkammer (2) umgeben ist und daß die Meßköpfe (9, 10, 11, 12) den gesamten Innenbereich des Reifens (3) überstreichen und prüfen.

2. Prüfgerät nach Anspruch 1, **dadurch gekennzeichnet, daß** die Prüfvorrichtung (8) und/oder die Positioniervorrichtung (4) drehbar gelagert ist.

3. Prüfgerät nach Anspruch 1 oder 2, **dadurch gekennzeichnet, daß** die Meßköpfe (9 - 12) in einem gleichen Winkelabstand voneinander angeordnet sind.

4. Prüfgerät nach einem der vorhergehenden Ansprüche, **dadurch gekennzeichnet, daß** die Meßköpfe (9 - 12) an der Prüfvorrichtung (8) verstellbar gelagert sind.

5. Prüfgerät nach einem der vorhergehenden Ansprüche, **dadurch gekennzeichnet, daß** ein oder mehrere Spiegel (15) zum Prüfen ansonsten schwer zugänglicher Stellen des Reifens (3) vorgesehen sind.

6. Prüfgerät für Reifen mit einer Positioniervorrichtung (14) für den zu prüfenden Reifen (3) und mit einer Prüfvorrichtung (8), insbesondere einer Laser-Prüfvorrichtung,
**dadurch gekennzeichnet,**
**daß** das Prüfgerät von einer Vakuumkammer (2) umgeben ist, daß zumindest ein Meßkopf (18) mit einer Mehrzahl von Beobachtungseinheiten (16) und diesen zugeordneten Beleuchtungsquellen (17) vorgesehen ist und daß die Beobachtungseinheiten (16) die Innenoberfläche des Reifens (3) absuchen können.

7. Prüfgerät nach Anspruch 6, wobei jeder der Beobachtungseinheiten (16) eine Mehrzahl von Beleuchtungsquellen (17) zugeordnet sind, wobei vorzugsweise jede der Beobachtungseinheiten (16) zwischen zwei Reihen von Laserlichtquellen angeordnet ist.

8. Prüfgerät nach einem der vorhergehenden Ansprüche, wobei der Meßkopf (18) einen modulartigen Aufbau besitzt.

9. Prüfgerät nach einem der Ansprüche 6 bis 8, wobei jede Beobachtungseinheit (16) zumindest eine Kamera aufweist.

10. Prüfgerät nach einem der Ansprüche 6 bis 9, wobei jede Beobachtungseinheit (16) mehrere Kameras (34) besitzt.

11. Prüfgerät nach einem der Ansprüche 6 bis 10, wobei die Beobachtungseinheiten (16) und/oder die Beleuchtungsquellen (17) zusammen mit dem Meßkopf (18) als Einheit bewegbar sind.

12. Prüfgerät nach einem der Ansprüche 6 bis 11, wobei die Beobachtungseinheiten (16) und/oder die Beleuchtungsquellen (17) relativ zu dem Meßkopf (18) bewegbar sind.

13. Prüfgerät nach einem der Ansprüche 6 bis 12, wobei die Beobachtungseinheiten (16) und/oder die Beleuchtungsquellen (17) um zumindest eine Achse schwenkbar und/oder entlang zumindest einer Achse verfahrbar ausgebildet sind.

14. Prüfgerät nach einem der vorhergehenden Ansprüche, wobei jeder Meßkopf (18) in mehreren Achsen (27, 28, 29, 30, 32) schwenkbar und verfahrbar ausgebildet ist.

15. Prüfgerät nach einem der Ansprüche 6 bis 14, wobei jeder der Beobachtungseinheiten (16) und/oder der Beleuchtungsquellen (17) zumindest ein Spiegel (33) zugeordnet ist, wobei vorzugsweise der Spiegel jeweils schwenkbar und/oder verfahrbar ausgebildet ist.

16. Prüfgerät nach einem der vorhergehenden Ansprüche, wobei eine Einrichtung (39, 40, 41; 42, 43, 44, 45) zur Erfassung der Größe und/oder Position des Reifens (3) und eine Steuereinrichtung, die zumindest einen Meßkopf (18) entsprechend der erfaßten Größe und/oder Position des Reifens positioniert, vorgesehen sind.

17. Prüfgerät nach dem vorhergehenden Anspruch, wobei die Einrichtung zumindest eine Beleuchtungsquelle (39; 42, 43) zur Beleuchtung des Reifens (3) und eine Beobachtungseinheit (40; 44, 45) aufweist, die den vom Reifen (3) projizierten Schatten erfaßt.

18. Prüfgerät nach einem der vorhergehenden Ansprüche, **dadurch gekennzeichnet, daß** das Prüfgerät eine Röntgeneinrichtung (40) zum Röntgen des Reifens (3) aufweist.

19. Prüfgerät nach einem der vorhergehenden Ansprüche, **dadurch gekennzeichnet, daß** das Prüfgerät ein Spannungs-Prüfgerät (50) mit zumindest einer Elektrode (51) und einem mit dieser zusammenwirkenden Gegenstück (52) aufweist, wobei die Elektrode und das Gegenstück auf unterschiedlichen Reifenseiten positionierbar sind.

20. Prüfgerät nach einem der vorhergehenden Ansprüche, **dadurch gekennzeichnet, daß** das Prüfgerät eine Überdruckvorrichtung zur Beaufschlagung des Reifens (3) mit Überdruck aufweist.

21. Prüfgerät nach einem der vorhergehenden Ansprüche, **dadurch gekennzeichnet, daß** das Prüfgerät eine Oberflächen-Prüfvorrichtung mit einer Kamera und einem daran angeschlossenen Bildverarbeitungssystem aufweist.

22. Prüfgerät nach einem der vorhergehenden Ansprüche, **dadurch gekennzeichnet, daß** das Prüfgerät eine Einrichtung zur gemeinsamen Ergebnisdarstellung verschiedener Einzelprüfungen aufweist.

## Claims

1. A testing apparatus for tyres having a positioning device (14) for the tyre (3) to be tested and having a testing device (8), in particular a laser testing device, which comprises a plurality of measuring heads (9, 10, 11, 12), in particular laser measuring heads,
**characterised in that**
the testing apparatus is surrounded by a vacuum chamber (2); and **in that** the measuring heads (9, 10, 11, 12) sweep over and inspect the total internal region of the tyre (3).

2. A testing apparatus in accordance with claim 1, wherein the testing device (8) and/or the positioning device (4) is/are rotatably supported.

3. A testing apparatus in accordance with either of claims 1 or 2, wherein the measuring heads (9 - 12) are arranged at an equal angular distance from one another.

4. A testing apparatus in accordance with any of the preceding claims, wherein the measuring heads (9 - 12) are adjustably supported on the testing device (8).

5. A testing apparatus in accordance with any of the preceding claims, wherein one or more mirrors (15) are provided for the testing of positions of the tyre (3) otherwise difficult to access.

6. A testing apparatus for tyres having a positioning device (14) for the tyre (3) to be tested and having a testing device (8), in particular a laser testing device,
**characterised in that**
the testing apparatus is surrounded by a vacuum chamber (2); **in that** at least one measuring head (18) is provided with a plurality of observation units (16) and of lighting sources (17) associated therewith; and **in that** the observation units (16) can sample the internal surface of the tyre (3).

7. A testing apparatus in accordance with claim 6, wherein a plurality of lighting sources (17) are associated with each of the observation units (16), with preferably each of the observation units (16) being arranged between two rows of laser light sources.

8. A testing apparatus in accordance with any of the preceding claims, wherein the measuring head (18) has a modular design.

9. A testing apparatus in accordance with any of claims 6 to 8, wherein each observation unit (16) has at least one camera.

10. A testing apparatus in accordance with any of claims 6 to 9, wherein each observation unit (16) has a plurality of cameras (34).

11. A testing apparatus in accordance with any of claims 6 to 10, wherein the observation units (16) and/or the lighting sources (17) can be moved as a unit together with the measuring head (18).

12. A testing apparatus in accordance with any of claims 6 to 11, wherein the observation units (16) and/or the lighting sources (17) are movable relative to the measuring head (18).

13. A testing apparatus in accordance with any of claims 6 to 12, wherein the observation units (16) and/or the lighting sources (17) are made pivotable about at least one axis and/or movable along at least one axis.

14. A testing apparatus in accordance with any of the preceding claims, wherein each measuring head (18) is made pivotable and movable in a plurality of axes (27, 28, 29, 30, 32).

15. A testing apparatus in accordance with any of claims 6 to 14, wherein at least one mirror (33) is associated with each of the observation units (16) and/or of the lighting sources (17), with the mirror preferably being made pivotable and/or movable in each case.

16. A testing apparatus in accordance with any of the preceding claims, wherein a device (39, 40, 41; 42, 43, 44, 45) for the detection of the size and/or position of the tyre (3) and a control device which positions at least one measuring head (18) in accordance with the detected size and/or position of the tyre are provided.

17. A testing apparatus in accordance with the preceding claim, wherein the device has at least one lighting source (39; 42, 43) for the illumination of the tyre (3) and an observation unit (40; 44, 45) which detects the shadow projected by the tyre (3).

18. A testing apparatus in accordance with any of the preceding claims, wherein the testing apparatus has an X-ray device (40) for the X-raying of the tyre (3).

19. A testing apparatus in accordance with any of the preceding claims, wherein the testing apparatus has a voltage testing apparatus (50) having at least one electrode (51) and a counter-piece (52) cooperating therewith, with the electrode and the counter-piece being positionable on different sides of the tyre.

20. A testing apparatus in accordance with any of the preceding claims, wherein the testing apparatus has an overpressure device to load the tyre (3) with overpressure.

21. A testing apparatus in accordance with any of the preceding claims, wherein the testing apparatus has a surface testing device with a camera and an imaging processing system connected thereto.

22. A testing apparatus in accordance with any of the preceding claims, wherein the testing apparatus has a device for the joint results presentation of different individual tests.

## Revendications

1. Appareil de test pour des pneumatiques comprenant un dispositif de positionnement (14) pour le pneumatique (3) à tester et un dispositif de test (8), en particulier un dispositif de test à laser, qui comprend plusieurs têtes de mesure (9, 10, 11, 12), en particulier des têtes de mesure à laser,
**caractérisé en ce que**
l'appareil de test est entouré d'une chambre à vide (2) et **en ce que** les têtes de mesure (9, 10, 11, 12) balaient et testent toute la zone intérieure du pneumatique (3).

2. Appareil de test selon la revendication 1, **caractérisé en ce que** le dispositif de test (8) et/ou le dispositif de positionnement (4) est logé de façon rotative.

3. Appareil de test selon la revendication 1 ou 2, **caractérisé en ce que** les têtes de mesure (9-12) sont disposées à une distance angulaire égale les unes des autres.

4. Appareil de test selon l'une quelconque des revendications précédentes, **caractérisé en ce que** les têtes de mesure (9-12) sont logées de façon réglable sur le dispositif de test (8).

5. Appareil de test selon l'une quelconque des revendications précédentes, **caractérisé en ce que** un ou plusieurs miroirs (15) sont prévus pour le test d'endroits par ailleurs difficilement accessibles du pneumatique (3).

6. Appareil de test pour le pneumatique comprenant un dispositif de positionnement (14) pour le pneumatique (3) à tester et un dispositif de test (8), en particulier un dispositif de test à laser,
**caractérisé en ce que**
l'appareil de test est entouré d'une chambre à vide (2), **en ce qu'**au moins une tête de mesure (18) est prévue avec une pluralité d'unités d'observation (16) et de sources d'éclairage (17) attribuées à ces unités et **en ce que** les unités d'observation (16) peuvent chercher la surface intérieure du pneumatique (3).

7. Appareil de test selon la revendication 6, une pluralité de sources d'éclairage (17) étant attribuée à chacune des unités d'observation (16), chacune des unités d'observation (16) étant disposée de préférence entre deux rangées de sources de lumière laser.

8. Appareil de test selon l'une quelconque des revendications précédentes, la tête de mesure (18) présentant une structure modulaire.

9. Appareil de test selon l'une quelconque des revendications 6 à 8, chaque unité d'observation (16) présentant au moins une caméra.

10. Appareil de test selon l'une quelconque des revendications 6 à 9, chaque unité d'observation (16) présentant plusieurs caméras (34).

11. Appareil de test selon l'une quelconque des revendications 6 à 10, les unités d'observation (16) et/ou les sources d'éclairage (17) pouvant être déplacées en même temps que la tête de mesure (18) sous la forme d'une unité.

12. Appareil de test selon l'une quelconque des revendications 6 à 11, les unités d'observation (16) et/ou les sources d'éclairage (17) pouvant être déplacées par rapport à la tête de mesure (18).

13. Appareil de test selon l'une quelconque des revendications 6 à 12, les unités d'observation (16) et/ou les sources d'éclairage (17) étant conçues de façon à pouvoir basculer autour d'au moins un axe et/ou être déplacées le long d'au moins un axe.

14. Appareil de test selon l'une quelconque des revendications précédentes, chaque tête de mesure (18) étant conçue de façon basculante et déplaçable sur plusieurs axes (27, 28, 29, 30, 32).

15. Appareil de test selon l'une quelconque des revendications 6 à 14, au moins un miroir (33) étant attribué à chacune des unités d'observation (16) et/ou des sources d'éclairage (17), le miroir étant conçu à chaque fois de préférence pivotant et/ou déplaçable.

16. Appareil de test selon l'une quelconque des revendications précédentes, un appareil (39, 40, 41; 42, 43, 44, 45) pour l'enregistrement de la grandeur et/ou de la position du pneumatique (3) et un appareil de commande étant prévu, lequel positionne au moins une tête de mesure (18) en fonction de la grandeur enregistrée et/ou de la position du pneumatique, étant prévus.

17. Appareil de test selon la revendication précédente, l'appareil présentant au moins une source d'éclairage (39; 42, 43) pour l'éclairage du pneumatique (3) et une unité d'observation (40; 44, 45) qui enregistre l'ombre projetée par le pneumatique (3).

18. Appareil de test selon l'une quelconque des revendications précédentes, **caractérisé en ce que** l'appareil de test présente un appareil de radiographie (40) pour la radiographie du pneumatique (3).

19. Appareil de test selon l'une quelconque des revendications précédentes, **caractérisé en ce que** l'appareil de test présente un appareil de test de tension (50) comprenant au moins une électrode (51) et une pièce inverse (52) coopérant avec cette électrode, l'électrode et la pièce inverse pouvant être positionnées sur différents côtés de pneumatique.

20. Appareil de test selon l'une quelconque des revendications précédentes, **caractérisé en ce que** l'appareil de test présente un dispositif de surpression pour l'alimentation du pneumatique (3) avec de la surpression.

21. Appareil de test selon l'une quelconque des revendications précédentes, **caractérisé en ce que** l'appareil de test présente un dispositif de test de surface avec une caméra et un système de traitement d'image raccordé à ce dispositif.

22. Appareil de test selon l'une quelconque des revendications précédentes, **caractérisé en ce que** l'appareil de test présente un dispositif pour la présentation commune des résultats de différents tests individuels.
